Europäisches Patentamt

**(19)** European Patent Office

Office européen des brevets

**(11)** Veröffentlichungsnummer: **0 011 252**

**A1**

**(12)** EUROPÄISCHE PATENTANMELDUNG

**(21)** Anmeldenummer: 79104406.8

**(22)** Anmeldetag: 08.11.79

**(51)** Int. Cl.³: **F 16 L 13/10**
H 02 G 3/06, F 16 B 11/00

**(30)** Priorität: 14.11.78 DE 2849380

**(43)** Veröffentlichungstag der Anmeldung:
28.05.80 Patentblatt 80 11

**(84)** Benannte Vertragsstaaten:
AT CH FR IT NL

**(71)** Anmelder: THYSSEN PLASTIK ANGER KG
Anzinger Strasse 1
D-8000 München 80(DE)

**(72)** Erfinder: Jirka, Karl
Melanchthonstrasse 38
D-8000 München 83(DE)

**(72)** Erfinder: Helf, Walter
Petersgasse 7b
D-8440 Straubing(DE)

**(54)** Rohrmuffe.

**(57)** Es wird eine Muffe für die Verbindung von aus Halbschalen bestehenden Rohren oder auch flatten Rohren oder Übergängen von aus Halbschalen bestehenden Rohren auf glatte Rohre beschrieben, die aus zwei Halbschalen besteht und einen im Durchmesser erweiterten Mittelteil aufweist, der eine hochviskose Dichtmasse, wie beispielsweise Silikon enthält. Die Verbindung der beiden Muffenhalbschalen erfolgt durch schwalbenschwanzgeführte Verschlußkeile, die keilförmig verlaufen und auf die Stoßstelle der Muffenhalbschalen aufgeschlagen sind, wodurch eine Verpressung der Dichtmasse und damit eine innige Verbindung mit den Oberflächen der zu verbindenden Rohre eintritt.

Fig. 2

0011252

781101 PGm
13.11.78

## Rohrmuffe

Die Erfindung bezieht sich auf eine Rohrmuffe, vorzugsweise zur Verbindung von aus Halbschalen zusammengesetzten Rohren untereinander bzw. solchen Rohren und einteiligen Rohren, wobei die Rohrmuffe als ein beide zu verbindenden Rohrende miteinander übergreifender rohrförmiger Körper ausgebildet ist, zwischen dem und den jeweiligen zu verbindenden Rohrenden ein Dichtmittel vorgesehen ist.

Zur Verbindung zweier Rohrenden dienende Rohrmuffen, die als separater Körper ausgebildet sind, sind an sich bekannt. Sie bestehen im wesentlichen aus einem rohrförmigen Körper, der nahe seinen Enden je eine Ringnut für die Aufnahme von Dichtmitteln verfügt und dessen Länge so bemessen ist, daß beide zu verbindenden Rohrenden ausreichend überdeckt sind, damit der Rohrstrang seine notwendige Steifigkeit behält. Eine andere Muffenkonstruktion dieser Art ist durch das DBP 1 160 248 bekanntgeworden, die im wesentlichen aus einem an seinen Enden nach innen eingezogenen rohrförmigen Körper besteht, an dessen beiden Enden je ein Dichtmittel eingesetzt ist, die beide durch einen Distanzkörper in ihrer Lage gehalten werden.

Solche Rohrmuffen sind zwar geeignet glatte, einstückige Rohre miteinander zu verbinden, jedoch sind sie nicht in der Lage aus Halbschalen bestehende Rohre, die notwendigerweise nicht vollständig rund sind, miteinander völlig gas- und flüssigkeitsdicht zu verbinden. Die Unrundheit solcher aus Halbschalen bestehender Rohre rührt daher, daß beide Halbschalen Verbindungsmittel aufweisen, um einen festen Verbund einzugehen.

Besonders für Kabelkanäle haben sich derartige aus Halbschalen bestehende Rohre bewährt. Diese Halbschalen sind an ihrer gesamten Länge mit Verbindungsmitteln ausgerüstet. Beispielsweise weist die eine Halbschale eine mit Dichtmittel gefüllte Nut auf, in die eine Feder der anderen Halbschale einrastet. Eine solche Verbindung bleibt auch dann dicht, wenn beispielsweise durch Erd- und Verkehrslasten bedingt, gewisse Deformationen des Rohrquerschnittes erfolgen sollten. Die Verbindung einzelner solcher aus Halbschalen bestehender Rohre untereinander, beispielsweise zu Kabelkanälen, ist problematisch, besonders dann, wenn die Verbindung ebenfalls gas- und flüssigkeitsdicht sein muß. Eine weitere Schwierigkeit stellt sich dann, wenn nicht nur aus solchen Halbrohrschalen bestehende Rohre untereinander, sondern auch mit ungeteilten Rohren verbunden werden müssen.

Der Erfindung liegt daher die Aufgabe zugrunde eine gas-

0011252

und flüssigkeitsdichte Verbindung für aus Halbschalen bestehende Rohre untereinander und zwischen solchen Rohren und einstückigen Rohren zu besitzen.

Erfindungsgemäß wird dies dadurch erreicht, daß die Rohrmuffe aus zwei Halbschalen besteht, deren Mittelteil einen gegenüber den Endabschnitten vergrößerten Innendurchmesser aufweist, und in den durch den Rohraußendurchmesser und den Muffenmittelteilinnendurchmesser entstehenden Hohlraum sowie zwischen die Stoßstellen der beiden Halbschalen eine hochviskose Dichtmasse eingebracht ist und die beiden Muffenhalbschalen mittels zweier schwalbenschwanzgeführter Verschlußkeile verschlossen werden.

Eine vorteilhafte Weiterbildung der Erfindung sieht vor, daß die Innenoberfläche des Mittelteiles profiliert ist.

Es hat sich auch als vorteilhaft erwiesen, als Dichtmasse Silikon oder ein anderes hochviskoses Dichtmittel einzusetzen.

Das Material für die Halbschale der Rohrmuffe ist vorzugsweise ein Thermoplast, aber auch glasfaserverstärkte Polyester und andere Duroplaste sind besonders geeignet.

Für spezielle Anwendungsfälle, besonders in Biegezonen, beispielsweise eines Kabelkanals, kann die Rohrmuffe zusätzlich mit einem oder mehreren Spannbändern versehen sein.

Eine derartig aufgebaute Rohrverbindung ist absolut gas- und flüssigkeitsdicht; sie hält zusätzliche Biegespannungen aus und kann sich von selbst nicht öffnen. Die in Weiterbildung der Erfindung vorgesehene Profilierung der Innenoberfläche des Mittelteiles der beiden Halbschalen bringt
den Vorteil, daß die erforderliche Verformung der Dichtmasse verbessert wird und gewisse unvermeidbare Dickenänderungen der bereits werkseitig eingebrachten Dichtmasse ausgeglichen werden. Der spezifische Anpreßdruck
wird dadurch noch erhöht.

Die Erfindung ist zum besseren Verständnis anhand eines
in den Abbildungen dargestellten Ausführungsbeispieles
näher erläutert.

Es zeigt

　　　Fig. 1　　　　eine Draufsicht auf die Rohrmuffe,

　　　Fig. 2　　　　einen Schnitt durch die Verbindungsstelle,

　　　Fig. 3　　　　eine Detailvergrößerung der Fig. 2
　　　　　　　　　　und

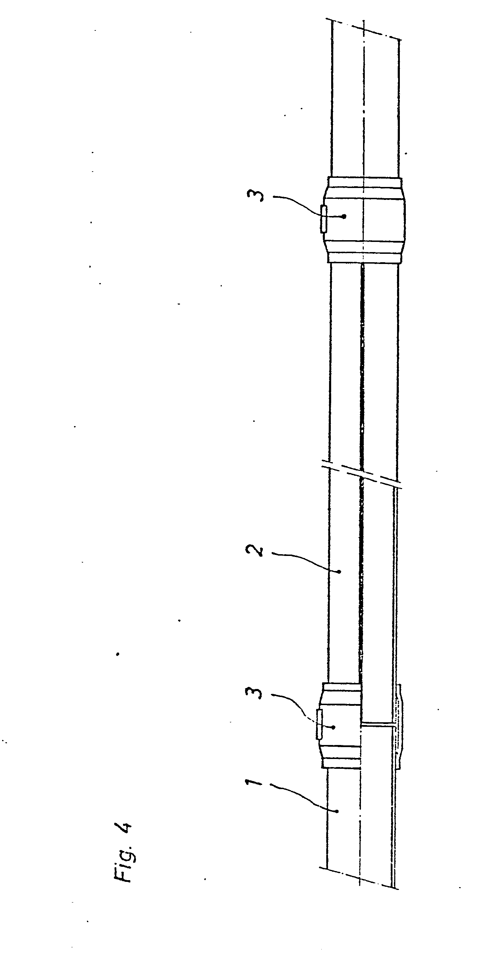

　　　Fig. 4　　　　einen Kabelkanal mit Rohrmuffen.

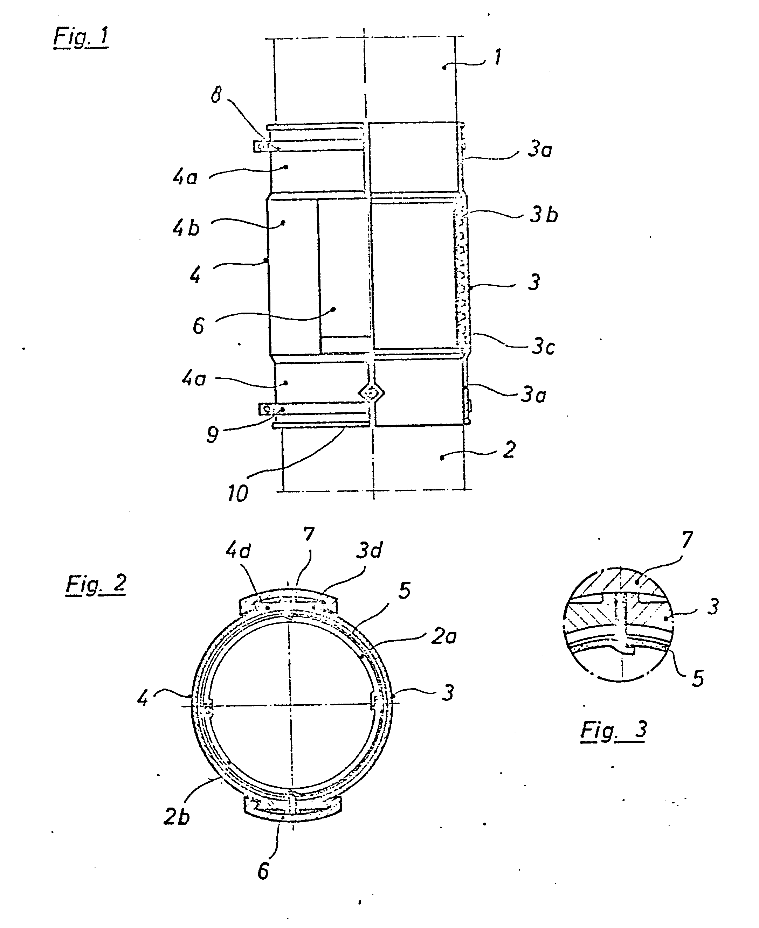

Die zur Verbindung zweier geteilter, also aus Halbschalen
bestehender Rohrenden 1 und 2 dienende Rohrmuffe besteht
ebenfalls aus zwei Halbschalen 3 und 4, die über die Stoßstelle der Rohrenden 1 und 2 angeordnet ist. Die beiden Endabschnitte 3a bzw. 4a der Halbschalen 3 bzw. 4, weisen einen
geringeren Durchmesser auf als der Mittelabschnitt 3b bzw.4b
derselben. In den Hohlraum zwischen dem erweiterten Mittelabschnitt 3b, 4b und dem Außenumfang der Rohrenden 1 und 2
ist eine hochviskose Dichtmasse 5 eingebracht. Diese Dichtmasse 5 ist auch in die Stoßstelle zwischen den beiden Halbschalen 3 und 4 vorhanden. Die inneren Oberflächen des Mittelteiles 3b, 4b sind mit einer Profilierung versehen. In der
Fig. 1 ist nur die Profilierung 3c gezeigt. Die beiden Halbschalen 3 und 4 werden auf beiden Seiten der Stoßstellen mit je einem Verschlußkeil 6 bzw. 7 verbunden.
Dieser Verschlußkeil ist in schwalbenschwanzartigen Vorsprüngen 3d bzw. 4d der Halbschalen, die keilförmig verlaufen, geführt.

Als Dichtmittel haben sich hochviskose Massen, wie z.B.
Silikon oder ähnliche Stoffe als geeignet erwiesen, deren
Konsistenz es erlaubt, durch Druck sich miteinander an den
Überlappungsstellen zu verbinden, so daß eine wasser- und
gasdichte Verbindung entsteht. Der dazu erforderliche Anpreßdruck wird durch die Verschlußkeile 6 und 7 erzeugt.
Diese Verschlußkeile sowie die schwalbenschwanzförmigen
Vorsprünge 3d bzw. 4d der beiden Halbschalen 3 und 4
sind keilförmig derartig ausgebildet, daß deren Steigung
eine feste Verbindung, die sich selbst nicht mehr lösen
kann, ergibt. Die beiden Verschlußkeile 6 bzw. 7 können
an der Baustelle in einfacher Weise durch Hammerschlag oder
dergleichen auf die beiden Halbschalen 3 und 4 aufgebracht
werden. Als Material für diese Verschlußkeile 6 und 7 sind
ebenso wie für die beiden Halbschalen 3 und 4 vorzugsweise
thermoplastische Kunststoffe vorgesehen, die besonders
wegen der Beanspruchung beim Aufbringen der Verschlußkeile
6,7 auf die Halbschalen 3,4 eine schlagzähe Einstellung des
Kunststoffmaterials bedingen. Als weitere Materialien bieten
sich besonders glasfaserverstärkte Kunststoffe, wie z.B.
Polyester oder andere Duroplaste an.

Treten zusätzliche Biegespannungen auf, beispielsweise wenn
die erfindungsgemäß vorgeschlagene Rohrmuffe in einer Biegezone des Kabelkanals liegt, kann ein zusätzliches Spannband 8
bzw. 9 um die Endabschnitte 3a bzw. 4a der Rohrmuffe gelegt werden. Die beiden Halbschalen 3,4 können beispielsweise auch zusätzlich mit einer Nut/Federanordnung als Montagehilfe verbunden werden, um zu vermeiden, daß die beiden Halbschalen bei der Montage nicht verkehrt aufgesetzt und nicht längsseitig verschoben werden können. Diese beispielsweise Nut/Federanordnung ist in Abb. 1 mit 10 bezeichnet. Dadurch wird gewährleistet, daß sich die verjüngenden Teile der Schwalbenschwanzführung in der richtigen Lage zueinander befinden. Dies ist auch noch deshalb von Vorteil, da beim Aufsetzen der Halbschalen 3,4 auf die Rohrenden 1,2 die Dichtmasse 5, die bereits auf die Innenseite des Mittelteiles 3b bzw. 4b der Halbschalen 3,4 aufgebracht ist, sich innig mit den Enden der Rohre 1,2 verbindet. Diese Verbindung ist nur mit entsprechendem Kraftaufwand wieder lösbar.

Vorteilhafterweise sollte die Anordnung der Halbschalen 3,4 der Rohrmuffe auf den aus Halbschalen gebildeten Rohrenden 1,2 insofern versetzt erfolgen, als die Stoßstellen der jeweiligen Halbschalen 3,4 nicht über die Stoßstellen der Rohrhalbschalen 2a, 2b zu liegen kommen sollten.

Auch eine Anordnung der Rohrmuffe auf den zu verbindenden Rohrenden 1,2, die in Längsrichtung versetzt ist, hat sich als vorteilhaft erwiesen. Damit wird erreicht, daß die Biegefestigkeit der Muffenverbindung wesentlich erhöht wird, was sich vor allem beim Einbau in Biegezonen mit relativ kleinen Krümmungsradien günstig auswirkt.

Selbstverständlich ist die Erfindung nicht auf Rohrmuffen beschränkt, die aus Halbschalen bestehende Rohrenden miteinander verbindet, sie ist auch dann mit Vorteil einzusetzen, wenn glatte Rohre miteinander verbunden werden müssen oder Übergänge von aus Halbschalen bestehenden Rohren auf glatte Rohre erfolgen oder umgekehrt.

0011252

781101 PGm
13.11.78

Patentansprüche

1. Rohrmuffe, vorzugsweise zur Verbindung von aus Halbschalen zusammengesetzten Rohren untereinander bzw. solchen Rohren und einteiligen Rohren, wobei die Rohrmuffe als ein beide zu verbindenden Rohrende miteinander übergreifender rohrförmiger Körper ausgebildet ist, zwischen dem und den jeweiligen zu verbindenden Rohrenden ein Dichtmittel vorgesehen ist, d a d u r c h   g e k e n n z e i c h n e t ,   d a ß   die Rohrmuffe(3,4)aus zwei Halbschalen(3, 4,) besteht, deren Mittelteil(3b, 4b,) einen gegenüber den Endabschnitten(3a, 4a)vergrößerten Innendurchmesser aufweist, und in den durch den Rohraußendurchmesser und den Muffenmittelteil-Innendurchmesser entstehenden Hohlraum sowie zwischen die Stoßstellen der beiden Halbschalen(3, 4,) eine hochviskose Dichtmasse(5) eingebracht ist und die beiden Muffenhalbschalen(3, 4,) mittels zweier schwalbenschwanzgeführter Verschlußkeile (6,7,)verschlossen werden.

2. Rohrmuffe nach Anspruch 1, d a d u r c h   g e k e n n z e i c h n e t ,   d a ß   die Innenoberfläche(3c)der

0011252

Mittelteile (3b, 4b) profiliert ist.

3. Rohrmuffe nach Anspruch 1 und 2, d a d u r c h  g e -
k e n n z e i c h n e t ,  d a ß  als Dichtmasse (5)
Silikon oder ein anderes hochviskoses Dichtmittel eingebracht ist.

4. Rohrmuffe nach Anspruch 1 bis 3, d a d u r c h  g e -
k e n n z e i c h n e t ,  d a ß  die Halbschalen (3,4) der
Rohrmuffe aus einem Thermoplast bestehen.

5. Rohrmuffe nach Anspruch 1 bis 3, d a d u r c h  g e -
k e n n z e i c h n e t ,  d a ß  die Halbschalen (3,4)
der Rohrmuffe aus glasfaserverstärktem Polyester oder
anderen Duroplasten bestehen.

6. Rohrmuffe nach Anspruch 1 bis 5, d a d u r c h  g e -
k e n n z e i c h n e t ,  d a ß  die Rohrmuffe zusätzlich mit einem oder mehreren Spannbändern (8,9) versehen ist.

7. Rohrmuffe nach Anspruch 1 bis 6, d a d u r c h  g e -
k e n n z e i c h n e t ,  d a ß  die beiden Halbschalen
(3,4) mit einer als Nut/Feder-Verbindung ausgebildeten
Montagehilfe (10) ausgerüstet sind.

0011252

Fig. 1

Fig. 2

Fig. 3

Fig. 4

**Europäisches Patentamt**

0011252
Nummer der Anmeldung

# EUROPÄISCHER RECHERCHENBERICHT

EP 79104406.8

| Kategorie | EINSCHLÄGIGE DOKUMENTE | | KLASSIFIKATION DER ANMELDUNG (Int.Cl.) 3 |
|---|---|---|---|
| | Kennzeichnung des Dokuments mit Angabe, soweit erforderlich, der maßgeblichen Teile | betrifft Anspruch | F 16 L 13/10 |
| | DE - A1 - 2 707 492 (BOSTIK GMBH)<br>+ Gesamt +<br>-- | 1,2,3 | H 02 G 3/06<br>F 16 B 11/00 |
| | DE - A1 - 2 521 803 (FELTEN)<br>+ Gesamt +<br>-- | 1,4,6 | |
| | US - A - 4 016 356 (MC LOUGHLIN)<br>÷ Fig. 1,2 +<br>-- | 1,2 | |
| | US - A - 3 757 031 (IZRAELI)<br>÷ Gesamt +<br>-- | 1,7 | **RECHERCHIERTE SACHGEBIETE (Int.Cl.) 3** |
| P | DE - A1 - 2 733 603 (LICENTIA)<br>+ Gesamt + (08-02-1979)<br>-- | 1,7 | F 16 B 2/00<br>F 16 B 7/00<br>F 16 B 11/00<br>F 16 L 7/00 |
| | DF - A1 - 2 526 449 (SCHMID)<br>+ Gesamt +<br>-- | 1,4 | F 16 L 13/00<br>F 16 L 17/00<br>F 16 L 19/00<br>F 16 L 21/00 |
| | DE - A1 - 2 647 235 (DIETER)<br>+ Fig. 1, 2 +<br>---- | 1 | F 16 L 47/00<br>H 02 G 3/00<br>H 02 G 15/00 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| WIEN | 15-01-1980 | SCHUGANICH |

EPA form 1503.1 06.78